# FASCICULE DE BREVET EUROPEEN

(11) **EP 1 473 999 B1**
(45) Date de publication et mention de la délivrance du brevet: **28.05.2008**
(21) Numéro de dépôt: 03739535.7
(22) Date de dépôt: 13.02.2003
(51) Int. Cl.: A22C 7/00, B65D 21/02

(54) **UNITE EMPILABLE COMPRENANT AU MOINS UNE ALVEOLE DESTINEE A CONTENIR UN PRODUIT ALIMENTAIRE TEL QUE DU JAMBON**
STAPELEINHEIT MIT MINDESTENS EINER KAMMER ZUR AUFNAHME EINES NAHRUNGSMITTELPRODUKTS WIE SCHINKEN
STACKING UNIT COMPRISING AT LEAST ONE CHAMBER FOR HOUSING A FOOD PRODUCT SUCH AS HAM

(30) Priorité: 14.02.2002 FR 0202050; 22.07.2002 FR 0209405
(43) Date de publication de la demande: 10.11.2004
(73) Titulaire: ARMOR INOX SA, F-56430 Mauron (FR)
(72) Inventeur: DREANO, Claude, F-56430 Mauron (FR)
(74) Mandataire: Maillet, Alain
(86) Numéro de dépôt international: PCT/FR2003/000472
(87) Numéro de publication internationale: WO 2003/067993

(56) Documents cités:
- EP-A- 0 292 417
- EP-A- 0 463 983
- EP-A- 1 026 091
- FR-A- 2 705 217

## Description

La présente invention concerne une unité empilable comprenant au moins une alvéole destinée à contenir un produit alimentaire tel que du jambon pendant sa cuisson.

Il est connu, pour mener la cuisson industrielle du jambon, de le cuire dans une enceinte de cuisson de volume relativement important. Les jambons sont enveloppés respectivement dans des poches de cuisson qu'il convient de disposer dans des alvéoles formant moule de cuisson d'une unité empilable.

Lorsque cette première unité empilable est remplie, elle sert de support à d'autres unités empilables qu'il convient alors de remplir puis d'empiler successivement les unes sur les autres pour former une pile qui est ensuite transférée dans une enceinte de cuisson. Dans certains cas, lorsque par exemple, la cuisson est menée dans une enceinte de cuisson contenant un fluide caloporteur, l'empilage est effectué à l'intérieur de l'enceinte de cuisson par l'intermédiaire d'un robot manipulateur.

Pour permettre la conformation du jambon lors de sa cuisson, chaque alvéole comporte sur son fond un moyen de pressage destiné à presser un jambon disposé dans une alvéole d'une autre unité empilable d'un rang inférieur. Ce moyen de pressage est constitué par exemple d'une plaque montée fixe sur le fond d'une alvéole. La dernière unité empilable empilée est généralement vide et ne sert que de moyen de pressage pour l'unité empilable du rang inférieur.

Compte tenu de la masse élevée d'une pile d'unités empilables, il importe de positionner avec précision une unité empilable par rapport à une autre unité empilable d'un rang inférieur pour que les moyens de pressage de ladite unité empilable puissent presser convenablement, c'est-à-dire de manière répétitive, les jambons, de l'unité empilable d'un rang inférieur.

Par ailleurs, pour obtenir des gains de productivité, les robots manipulateurs chargés d'effectuer le transfert des unités empilables et, en particulier leurs empilements, travaillent à grande vitesse et occasionnent de ce fait des balancements des unités empilables qui perdurent encore lors de leurs empilements.

Bien que pourvues de moyens de positionnement, les unités empilables connues ne permettent pas d'obtenir une précision de positionnement suffisante entre elles lors de leurs empilements.

De telles unités empilables sont décrites dans les documents EP-A-292 417, EP-A-1 026 091 et EP-A-463 983 qui divulguent des unités empilables conformes au préambule de la revendication 1.

Le but de l'invention est donc de proposer notamment une unité empilable dont la construction originale permet de pallier ces inconvénients.

Plus particulièrement, l'invention propose une unité empilable du type qui comprend au moins une alvéole destinée à contenir un produit alimentaire tel que du jambon pendant sa cuisson, ladite ou chaque alvéole étant pourvue d'un moyen de pressage prévu pour permettre le pressage d'un produit alimentaire contenu dans une alvéole correspondante d'une autre unité empilable identique d'un rang inférieur, l'unité empilable étant pourvue de moyens de support destinés à permettre l'assise de l'unité empilable sur une autre unité empilable identique ainsi que de moyens de centrage destinés à permettre le positionnement latéral de l'unité empilable lors de son empilement sur une autre unité empilable identique de telle manière que l'unité empilable puisse être disposée dans le prolongement vertical de ladite autre unité empilable.

Afin d'atteindre le but mentionné ci-dessus, cette unité empilable est caractérisée en ce qu'elle comporte des moyens de guidage prévus pour permettre, lors de l'empilement de ladite unité empilable sur une autre unité empilable identique, le guidage de l'unité empilable selon au moins un plan contenant la direction verticale d'empilement.

Selon une autre caractéristique de l'invention, lesdits moyens de guidage sont prévus pour guider ladite unité selon deux plans perpendiculaires entre eux et contenant ladite direction d'empilement.

Selon une autre caractéristique de l'invention, les moyens de centrage sont prévus pour agir dans deux directions perpendiculaires entre elles et perpendiculaires à ladite direction d'empilement.

Selon une autre caractéristique de l'invention, lesdits moyens de guidage sont constitués d'au moins une paroi de chaque pied, ladite ou chaque paroi s'étendant dans une direction parallèle à la direction d'empilement et pouvant coopérer avec au moins un élément de guidage de ladite unité.

Selon une autre caractéristique de l'invention, chaque élément de guidage est formé sur des moyens de préhension que comporte ladite unité empilable.

Selon une autre caractéristique de l'invention, chaque élément de guidage est formé par un pion que comporte ladite unité empilable.

Selon une autre caractéristique de l'invention, les moyens de guidage sont constitués par les faces arrière de chaque pied, lesdites faces étant prévues pour coopérer respectivement avec des plaques d'une autre unité empilable de rang inférieur.

Selon une autre caractéristique de l'invention, les moyens de guidage sont constitués par les faces arrière de bras de moyens de préhension que comporte ladite unité empilable, lesdites faces étant destinées à coopérer respectivement avec des plaques d'une autre unité empilable de rang supérieur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1a représente une vue en perspective d'une unité empilable d'un premier type selon l'invention,
la Fig. 1b représente une vue en perspective d'une unité empilable d'un second type selon l'invention,
la Fig. 2 représente une vue schématique de face d'une unité empilable en cours d'empilement sur une autre unité empilable d'un rang inférieur,
la Fig. 3 représente une vue de face d'une unité empilable selon l'invention, la partie gauche étant une coupe partielle au niveau de l'alvéole,
la Fig. 4a représente une vue de face d'une unité empilable en phase de centrage sur une unité empilable d'un rang inférieur selon l'invention,
la Fig. 4b représente une vue de face d'une unité empilable en début de phase de guidage sur une unité empilable d'un rang inférieur selon l'invention,
la Fig. 4c représente une vue de face d'une unité empilable en position d'appui sur une unité empilable d'un rang inférieur selon l'invention,
la Fig. 5 représente une vue partielle de côté d'une unité empilable en cours d'empilement sur une autre unité empilable d'un rang inférieur selon l'invention,
la Fig. 6 représente une vue partielle de face d'une unité empilable pourvue d'une variante de réalisation de moyens de guidage,
la Fig. 7a représente une vue de face partielle d'une unité empilable en début de phase de guidage selon un autre mode de réalisation de l'invention, et
la Fig. 7b représente une vue de face partielle de la même unité empilable en position d'appui.

L'invention qui est décrite ci-après est en relation avec la cuisson du jambon. On comprendra qu'elle peut s'appliquer à d'autres types de produit alimentaire.

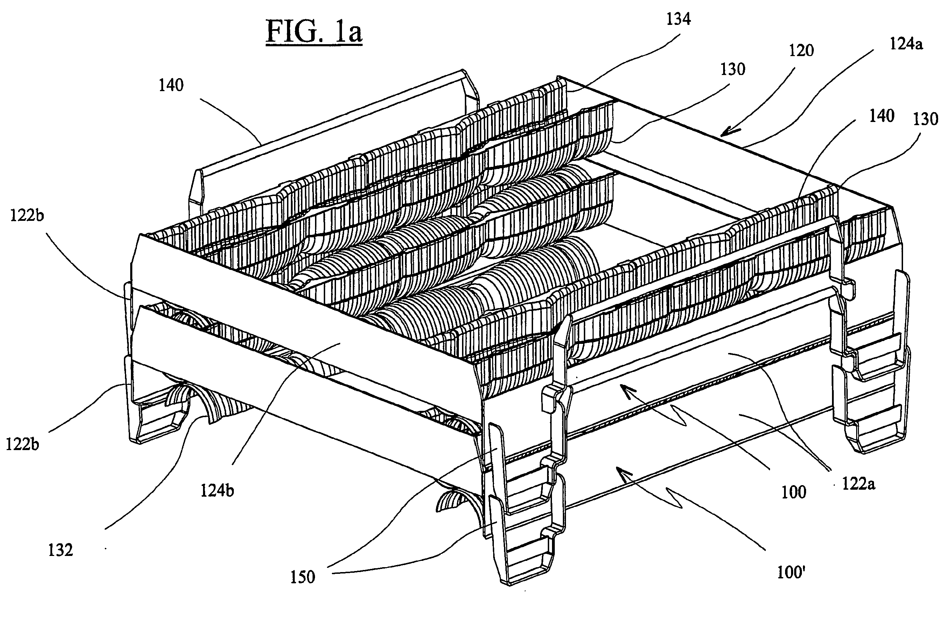

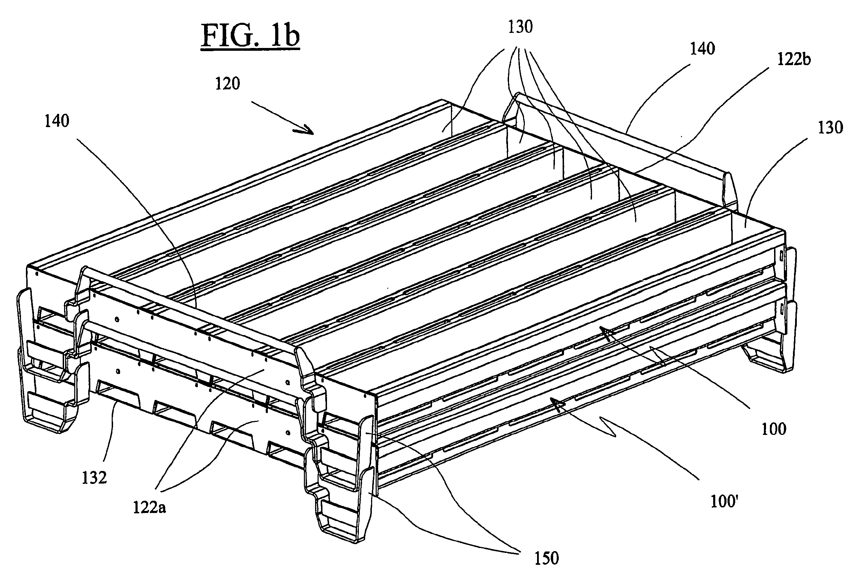

A la Fig. 1a, on a représenté deux unités empilables 100 et 100', selon un premier mode de réalisation, empilées l'une sur l'autre. Quant à la Fig. 1b, on a représenté également deux unités empilables 100 et 100' mais selon un second mode de réalisation.

Chacune des unités empilables 100 et 100' qui est représentée aux Figs. 1a et 1b, comprend un cadre 120 dont les côtés sont constitués de deux plaques transversales 122a et 122b disposées en vis-à-vis. Dans le mode de réalisation de la Fig. 1a, les plaques 122a et 122b sont réunies à leurs extrémités par deux flasques longitudinaux 124a et 124b. Au moins une alvéole 130 est montée à l'intérieur du cadre 120 de telle manière que son axe longitudinal soit parallèle aux plaques transversales 122a et 122b dans l'exemple de réalisation de la Fig. 1a, ou soit perpendiculaire aux plaques 122a et 122b dans l'exemple de réalisation représenté à la Fig. 1b. A la Fig. 1a, on n'a représenté, pour un souci de clarté de la figure, que deux alvéoles 130, alors qu'à la Fig. 1b, on n'en a représenté six.

Chaque alvéole 130 est destinée à recevoir un produit alimentaire, en particulier du jambon, qu'en général, mais pas nécessairement, on enveloppe au préalable dans une poche de cuisson, pour sa cuisson dans une enceinte de cuisson. Chaque alvéole 130 comprend également sur son fond un moyen de pressage 132 constitué, par exemple, d'un couvercle prévu pour pénétrer dans une autre alvéole correspondante d'une unité empilable de rang inférieur de manière à pouvoir presser, pendant sa cuisson, le produit alimentaire qui s'y trouve.

On notera que, dans une enceinte de cuisson, on introduit plusieurs unités empilables 100 qui sont empilées les unes sur les autres.

Compte tenu de la masse élevée d'un ensemble d'unités empilables 100 (une pile d'unités empilables 100 peut peser plusieurs milliers de kg), il importe de positionner avec précision une unité empilable 100 lors de son empilement sur une autre unité empilable 100' d'un rang inférieur. Cette précision de positionnement doit être telle que, lors de l'empilement de l'unité empilable 100, le moyen de pressage 132 d'une alvéole 130 de l'unité empilable 100 puisse presser uniformément les produits alimentaires J disposés dans l'alvéole 130 correspondante de l'autre unité empilable 100' d'un rang inférieur.

L'objet de l'invention est de proposer des moyens qui permettent d'obtenir ce positionnement précis.

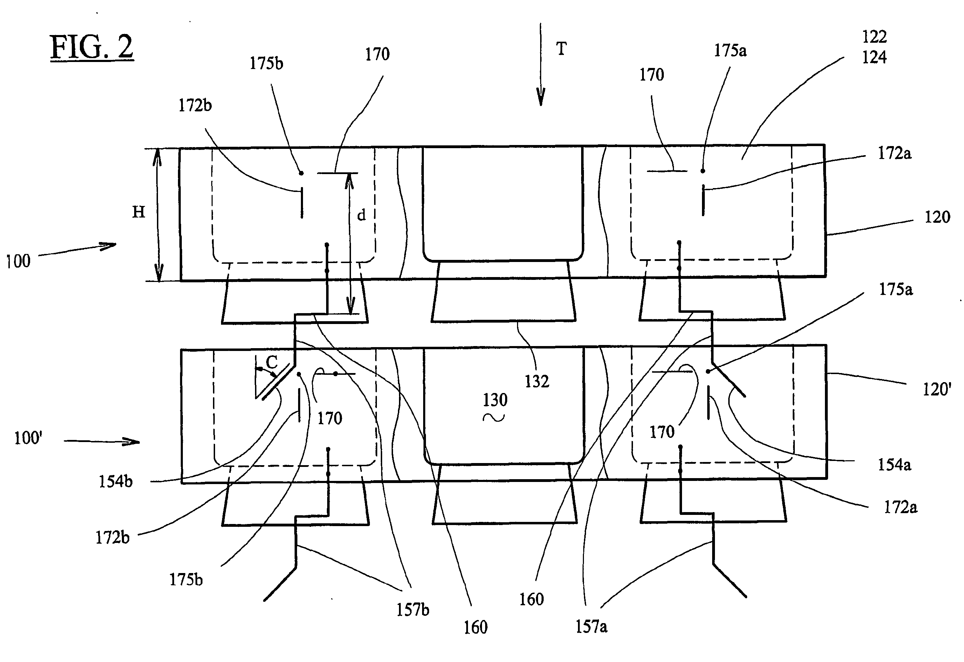

On a représenté à la Fig. 2 une vue de face schématique d'une unité empilable 100 en cours d'empilement sur une autre unité empilable 100' d'un rang inférieur, chacune desdites unités 100 et 100' présentant les moyens de l'invention. Chaque unité empilable 100 comprend des moyens de support 160 et 170 prévus pour permettre son positionnement en hauteur sur l'unité empilable 100'. Les moyens de support 160 et 170 sont des composants distincts et sont respectivement constitués de moyens d'appui 160, schématisés ici par des traits horizontaux 160, et de moyens de soutien 170, schématisés ici par d'autres traits horizontaux 170. Avantageusement, quatre moyens d'appui 160 et quatre moyens de soutien 170 correspondants sont disposés respectivement par paires réparties sur deux côtés opposés 122 (ou 124) du cadre 120 de chaque unité empilable 100. Seuls deux moyens d'appui 160 et deux moyens de soutien 170 sont visibles à cette Fig. 2.

On comprendra que chaque moyen d'appui 160 d'une unité empilable 100 est destiné à coopérer avec un moyen de soutien 170 d'une autre unité empilable 100' d'un rang inférieur.

L'unité empilable 100 comporte également des moyens de centrage destinés à corriger, au besoin, son positionnement latéral vis-à-vis de l'autre unité empilable 100' lors de son empilement, de manière à ce que les cadres 120 et 120' des unités empilables 100 et 100' puissent être disposés dans le prolongement l'un de l'autre.

Comme cela est visible à la Fig. 2, les moyens de centrage sont constitués d'au moins deux rampes de centrage 154a et 154b formant respectivement un angle C aigu avec la direction verticale d'empilement T et qui sont destinées à coopérer, lors d'une phase de centrage de l'empilement, respectivement avec des éléments de centrage 175a et 175b, représentés ici par de simples points, d'une unité empilable 100' de rang inférieur identique à l'unité 100.

L'unité empilable 100 comporte aussi des moyens de guidage permettant le déplacement suivant une direction verticale d'empilement T de l'unité empilable 100 lors de son empilement sur une unité empilable 100' pour notamment permettre audit ou chaque moyen de pressage 132 de pénétrer dans son alvéole 130 respective sans la toucher.

Comme cela est visible à la Fig. 2, ces moyens de guidage sont constitués, d'une part, de premiers éléments de guidage 157a et 157b et, d'autre part, de seconds éléments de guidage 172a et 172b. Les premiers éléments de guidage 157a et 157b sont destinés à respectivement coulisser, lors d'une phase de guidage de l'empilement de l'unité empilable 100 sur l'unité empilable 100', sur les seconds éléments de guidage 172a et 172b de l'unité empilable 100' de rang inférieur.

On va maintenant décrire des modes de réalisation spécifiques des moyens de support, des moyens de centrage et des moyens de guidage de l'invention avantageusement adaptés non seulement à l'empilement des unités empilables entre elles mais également à leur manipulation.

De manière générale, pour permettre sa manipulation, par exemple par un robot manipulateur, en vue, avant cuisson, de sa dépose sur une autre unité empilable ou, après cuisson, de son retrait de cette autre unité empilable, chaque unité empilable 100 comporte, comme cela est représenté aux Figs. 1a et 1b, au moins deux moyens de préhension 140 qui sont disposés respectivement au-dessus des alvéoles 130 et qui sont par exemple destinés à être accrochés à un moyen de levage, non représenté, d'un robot manipulateur. Ces moyens de préhension 140 sont par exemple disposés symétriquement par rapport à ladite unité empilable 100 et sont fixés respectivement sur deux côtés opposés du cadre 120, en l'occurrence sur les plaques transversales 122a et 122b et à l'extérieur du cadre 120.

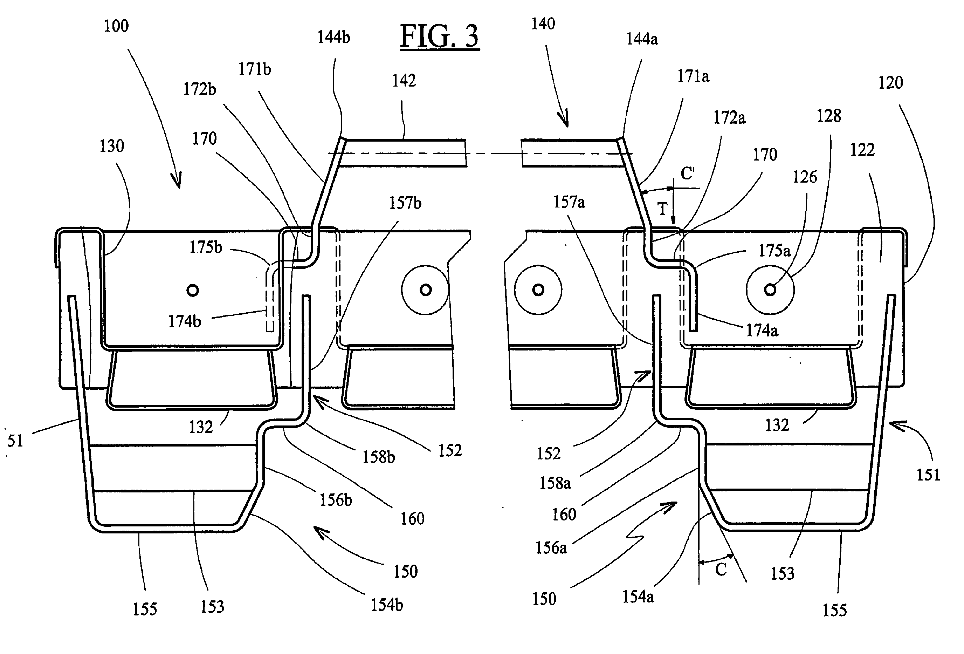

A la Fig. 3, est visible un exemple de réalisation d'un moyen de préhension 140 selon un mode de réalisation avantageux de l'invention. Il est constitué d'une barre 142 fixée à ses extrémités libres à deux bras 144a et 144b constitués respectivement de bandes de métal qui sont formées par pliage et qui sont elles-mêmes fixées par soudage auxdits côtés opposés du cadre 120, en l'occurrence sur les plaques transversales 122a et 122b. Chaque bras 144a ou 144b est coudé de manière à présenter une partie sensiblement horizontale 170 qui va constituer les moyens de soutien mentionnés ci-dessus en relation avec la Fig. 2. La partie horizontale 170 de chaque bras 144a et 144b est prolongée vers le haut par une partie 172a ou 172b disposée parallèlement à la direction verticale d'empilement T qui va constituer, comme on le comprendra par la suite, des éléments de guidage comme mentionnés ci-dessus en relation avec la Fig. 2. La partie de guidage 172a ou 172b est elle-même prolongée par une partie inclinée 171a ou 171b qui forme un angle C' aigu avec la direction verticale d'empilement T et va constituer d'autres éléments de guidage comme mentionnés ci-dessus en relation avec la Fig. 2. De plus, la partie horizontale 170 de chaque bras 144a, 144b est prolongée vers le bas par une paroi 174a, 174b dont le coude 175 formé avec la partie 170 va constituer, comme on le comprendra par la suite, un élément de centrage tel que mentionné ci-dessus en relation avec la Fig. 2.

De manière générale encore, afin de surélever, lorsqu'elle repose au sol, une unité empilable 100 de façon à permettre le passage d'un moyen de soulèvement, tel que les fourches d'un chariot élévateur, cette unité empilable 100 comporte également des pieds 150, tel que cela est visible aux Figs. 1a et 1b. En réalité, chaque unité empilable 100 comporte quatre pieds 150 qui sont disposés symétriquement sur l'unité empilable 100 et qui sont fixés par paires respectivement sur les deux mêmes côtés opposés du cadre 120 sur lesquels sont fixés les deux moyens de préhension 140.

Plus spécifiquement, comme cela est visible à la Fig. 3, chaque pied 150 est constitué d'un support métallique avantageusement constitué d'une bande de métal pliée de manière à former une paroi d'assise 155 destinée à reposer sur le sol, et un premier et second montants 151 et 152. Les extrémités libres du premier montant 151 et du second montant 152 sont fixées, par exemple par soudage, sur l'un des côtés du cadre 120. Le montant 152 comprend, depuis la face d'assise 155, une paroi inclinée 154a, 154b formant un angle C aigu avec la direction d'empilement T. Cette paroi 154a, 154b va constituer une rampe de centrage telle que mentionnée ci-dessus en relation avec la Fig. 2. Cette paroi 154a, 154b est prolongée par une paroi verticale 156a, 156b (constituant un élément de guidage), puis par une paroi d'appui 160 (constituant des moyens d'appui) disposée dans un plan horizontal. Cette face d'appui 160 est également prolongée vers le haut par une paroi de guidage 157a, 157b disposée parallèlement à la direction verticale d'empilement T et qui va constituer un élément de guidage tel que cela est mentionné ci-dessus en relation avec la Fig. 2. A l'intersection de la paroi 156a, 156b avec la paroi 160, se trouve un coude 158a, 158b qui, comme on le comprendra par la suite, va constituer un élément de centrage à l'instar de ce qui est mentionné ci-dessus en relation avec la Fig. 2.

Avantageusement, afin d'améliorer la résistance mécanique des pieds 150 lors de l'empilage des unités empilables 100, les deux montants 151 et 152 ne sont pas parallèles entre eux. Les montants 151 et 152 d'un pied 150 sont également réunis par une barre de renfort 153 soudée par ses extrémités auxdits montants 151 et 152.

Le fonctionnement d'une unité empilable 100, lors de son empilement sur une autre unité empilable 100', est maintenant décrit.

On dispose d'une première unité empilable 100' remplie de jambon prêt à cuire. Une seconde unité empilable 100, remplie également de jambon prêt à cuire, est ensuite empilée sur l'unité empilable de rang inférieur 100'.

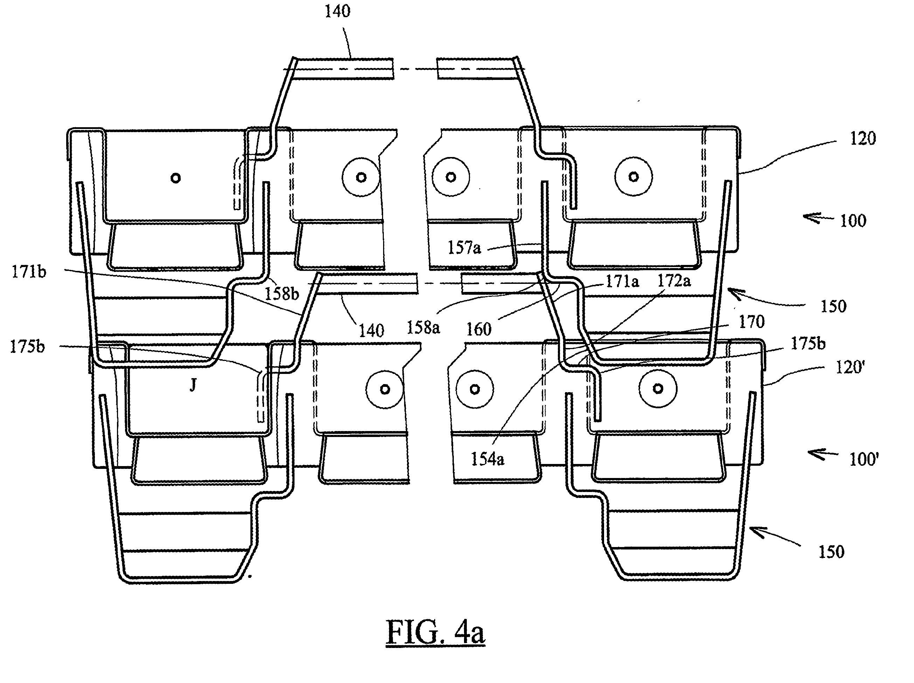

Au fur et à mesure de l'empilement, les moyens de centrage entrent en action, comme cela est représenté à la Fig. 4a. Comme on peut le constater, les parois inclinées 154a ou 154b peuvent coopérer respectivement avec les coudes de centrage 175a ou 175b de manière à ramener l'unité empilable 100 dans une position où elle surplombe l'unité 100' de rang inférieur. De même, les parois inclinées 171a ou 171 b peuvent coopérer avec les coudes 158a ou 158b des pieds 150. Ainsi, cela permet de positionner et centrer le cadre 120 de l'unité empilable 100 dans le prolongement du cadre 120' de l'unité empilable 100'. On supprime de la sorte ou tout du moins on réduit considérablement les risques de mauvais positionnement de l'unité empilable 100 sur l'unité empilable 100' de rang inférieur.

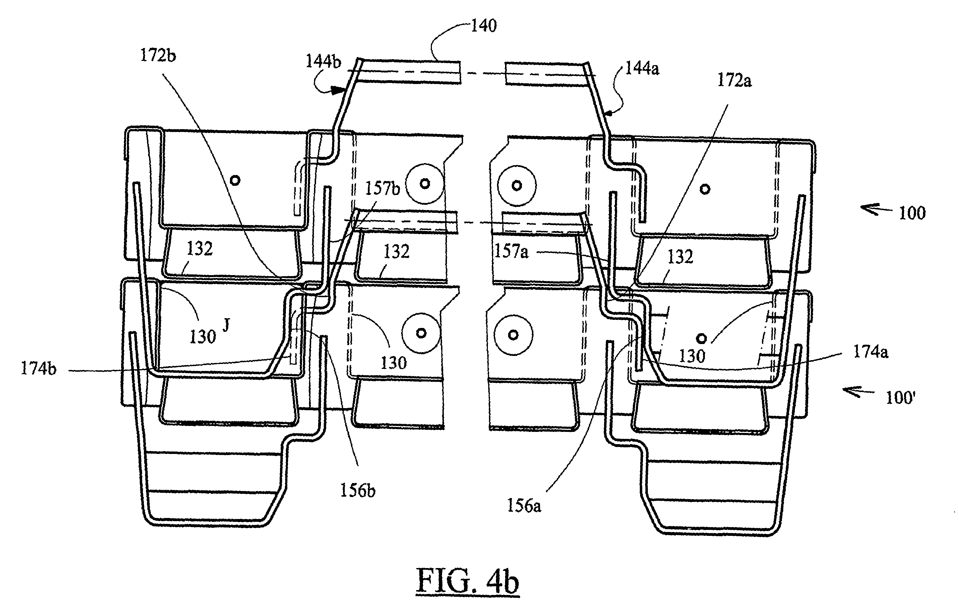

Une fois cette phase de centrage opérée, les moyens de guidage entrent en action, comme cela est représenté à la Fig. 4b. Comme on peut le constater, les parois 157a et 157b des pieds 150 coulissent respectivement le long des parois 172a et 172b des moyens de préhension 140. De même, les parois 156a et 156b des pieds 150 coulissent le long des parois 174a et 174b des moyens de préhension 140. Les moyens de guidage permettent ainsi un déplacement précis suivant une direction verticale d'empilement T de l'unité empilable 100 lors de son empilement sur l'unité empilable 100'. De ce fait, les moyens de pressage 132 de l'unité empilable 100 peuvent être guidés au moment de leur introduction dans les alvéoles 130 correspondantes de l'unité empilable 100' sans accrocher les rebords desdites alvéoles 130.

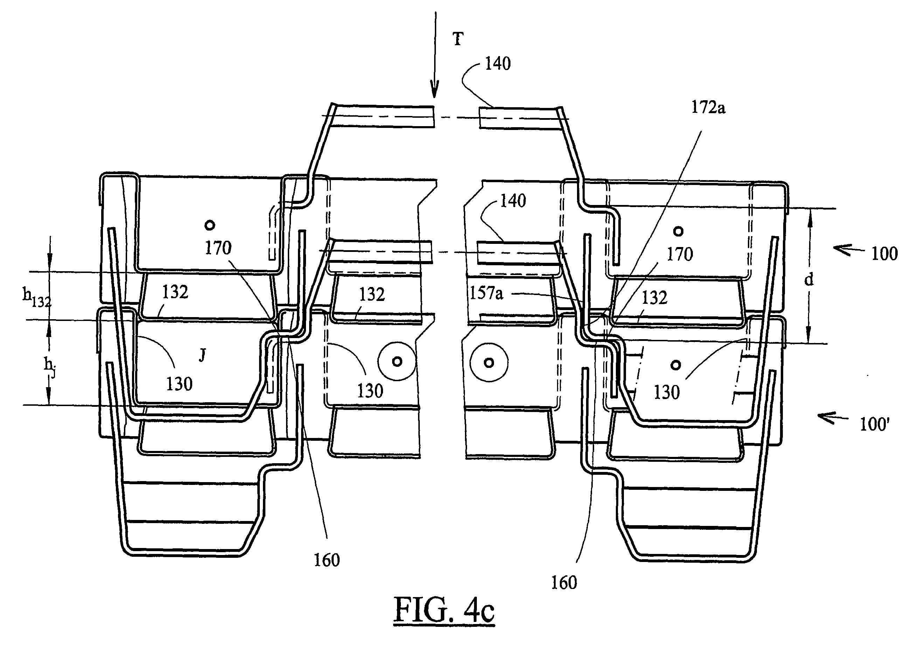

En fin de la phase de guidage, comme cela est visible à la Fig. 4c, les moyens d'appui 160 de l'unité empilable 100 se posent sur les moyens de soutien 170 de l'unité empilable 100' de rang inférieur. Là, dans cette position, les moyens de pressage 132 pressent les jambons contenus dans l'unité empilable 100'.

On notera que la distance d séparant un plan passant par la surface d'appui définie par les moyens d'appui 160, et un plan passant par la surface de soutien définie par les moyens de soutien 170, est égale à la hauteur h₁₃₂ d'un couvercle 132 additionnée à la hauteur du produit alimentaire hj lorsque celui est pressé additionné de l'épaisseur de la tôle constituant le fond de l'alvéole 130, comme cela est visible à la Fig. 4c. On notera qu'on appelle hauteur h₁₃₂ du couvercle 132, la distance qui sépare sa face active et le fond de l'alvéole 130 correspondante.

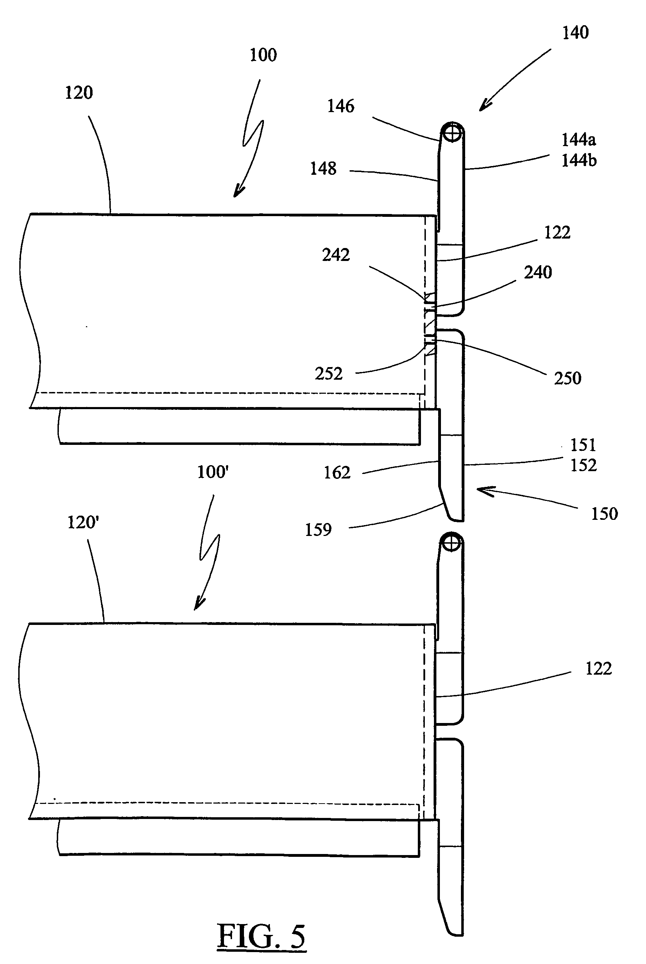

De manière à assurer un positionnement précis d'une unité empilable 100 sur une autre unité empilable 100', ces unités 100 et 100' doivent avantageusement pouvoir, lors de leur empilement, être centrées et guidées l'une par rapport à l'autre, aussi bien dans un plan parallèle aux parois 122a et 122b (voir Figs. 1a et 1b), mais aussi dans un plan perpendiculaire à ces parois 122a et 122b. L'invention prévoit de tels moyens de centrage et de tels moyens de guidage, moyens qui sont décrits en relation avec la Fig. 5.

A la Fig. 5, on a représenté, vu sous un autre angle, une unité empilable 100 lors de la phase d'empilement sur une autre unité empilable 100' d'un rang inférieur.

Les moyens de centrage sont constitués, d'une part, de parois chanfreinées 146 réalisées respectivement sur les faces tournées vers le cadre 120 des bras 144a et 144b des moyens de préhension 140 et, d'autre part, de parois chanfreinées 159 réalisées respectivement sur les faces tournées vers le cadre 120 des pieds 150. Les parois 146 et 159 sont destinées à coopérer respectivement avec les arêtes inférieures des côtés du cadre d'une unité empilable de rang supérieur et avec les arêtes supérieures des côtés du cadre 120' d'une unité empilable 100' de rang inférieur.

Les moyens de guidage sont quant à eux constitués, d'une part, par les faces arrière 148 des bras 144a, 144b de chaque moyen de préhension 140 et, d'autre part, par les faces arrière 162 de chaque pied 150. Les faces arrière 148 et 162 sont destinées à coopérer respectivement avec des côtés du cadre 120 d'une unité empilable de rang supérieur et des côtés du cadre 120 d'une unité empilable 100' de rang inférieur.

Les faces arrière 148 et 162 permettent ainsi de guider l'unité empilable 100 lors de son empilement sur une unité empilable 100' de rang inférieur. Les faces arrière 148 et 162 sont également déportées des faces des côtés du cadre 120 sur lesquelles elles sont soudées pour induire un jeu nécessaire au guidage et éviter également le coincement des bras 144a et 144b et des montants 151 et 152 sur des soudures de fixation des bras 144a et 144b et des montants 151 et 152 d'une autre unité empilable de rang supérieur ou de rang inférieur.

De manière à permettre un positionnement relatif précis des moyens de préhension 140 et des pieds 150 sur l'unité empilable 100 avant de les souder sur celle-ci, les bras 144a et 144b ainsi que les montants 151 et 152 comportent respectivement, comme cela est visible à la Fig. 5, des tétons de centrage 240 et 250 qui sont destinés à être positionnés respectivement dans des orifices de positionnement 242, 252 correspondants, réalisés dans des côtés du cadre 120. Ces tétons de centrage 240 et 250 sont avantageusement réalisés dans les bandes de métal qui constituent les pieds 150 et les moyens de préhension 140 par un procédé de découpe par laser.

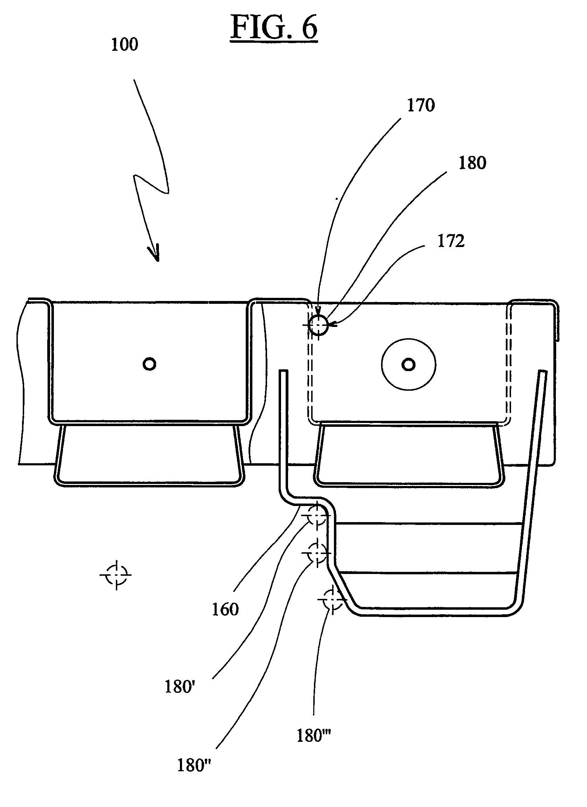

On a représenté à la Fig. 6 une variante de réalisation d'une unité empilable 100 qui ne comporte pas de moyens de préhension comme dans le mode de réalisation précédent. Dans ce mode de réalisation, les moyens de soutien 170 sont matérialisés par une génératrice d'un pion 180, génératrice qui est destinée à recevoir la paroi 160 d'un pied 150 d'une unité empilable de rang supérieur. On a représenté en pointillés le pion 180' d'une unité empilable 100' (non représentée) sur lequel repose la paroi 160. Il constitue donc, avec la paroi 160, des moyens de soutien selon la présente invention. De même, une génératrice 172 du pion 180 est prévue pour pouvoir coulisser le long de la paroi 156a, 156b d'un pied 150 (comme cela est schématisé par le pion 180" en pointillés). Il constitue alors des moyens de guidage selon l'invention. Ce même pion 180 est également destiné à coulisser le long de la paroi 154 d'un pied 150, comme cela est schématisé par le pion 180"' en pointillés. Il constitue donc également des moyens de centrage selon l'invention.

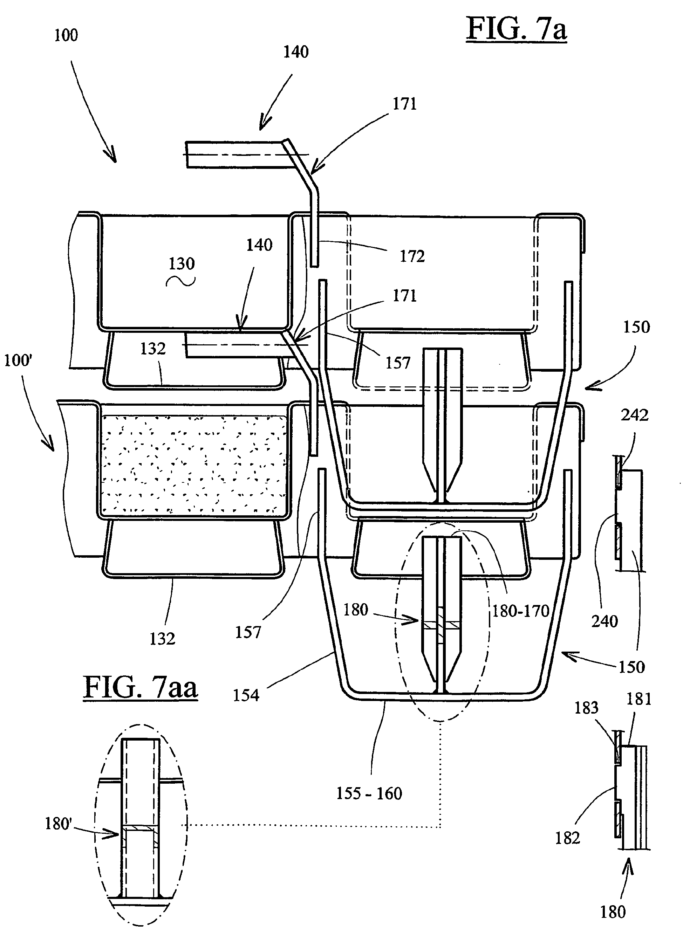

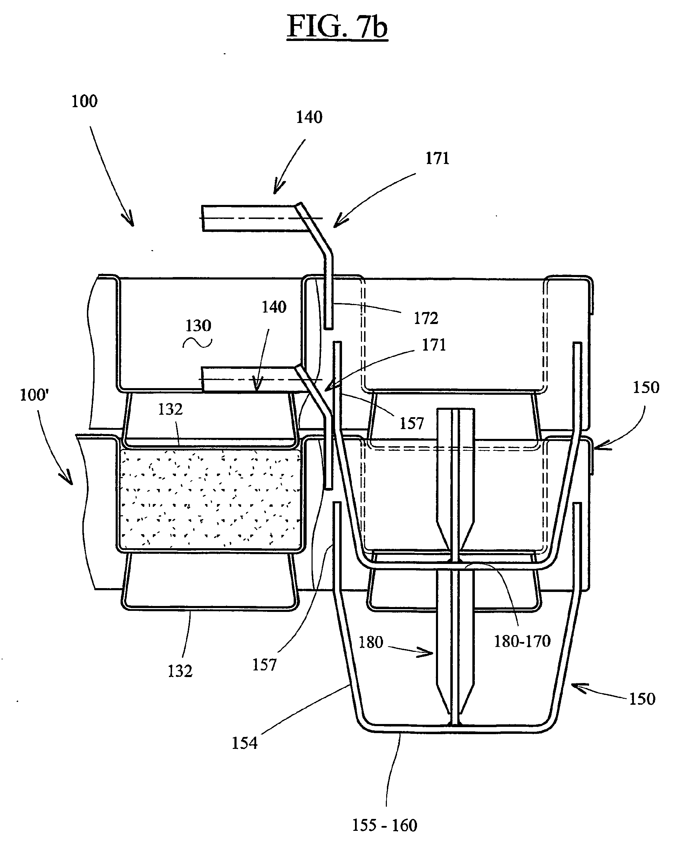

On a représenté aux Figs. 7a et 7b un autre mode de réalisation d'une unité empilable (ici deux unités 100 et 100' en voie d'empilement à la Fig. 7a et empilées à la Fig. 7b) selon la présente invention. Chaque unité comporte des pieds 150 qui présente la forme d'un U avec les angles légèrement tronqués. Ils comportent notamment un élément de guidage 157. Ces pieds 150 présentent l'avantage de présenter une forme symétrique si bien qu'un pied droit peut également convenir à gauche et réciproquement.

Chaque unité empilable comporte également des moyens de préhension 140 qui comporte une paroi inclinée 171 laquelle constitue des moyens de centrage de l'unité afin d'assurer son positionnement latéral par rapport à une autre unité empilable inférieure lors de son empilement sur cette dernière.

Les moyens de préhension 140 comporte également un élément de guidage 172 qui est destiné à coopérer avec l'élément de guidage 157 de manière à coulisser l'un par rapport à l'autre lors d'une phase de guidage de l'unité empilable 100 lors de son empilement sur l'unité empilable 100', comme cela est visible sur la Fig. 7a. On rappelle que cette phase de guidage a lieu après la phase de centrage et avant l'assise de l'unité 100 sur l'unité 100' et qu'elle permet à chaque moyen de pressage 132 de pénétrer dans son alvéole 130 respective sans la toucher.

Chaque pied 150 comporte également une paroi d'assise 155 qui, comme on le comprendra, constitue également un moyen d'appui 160 au sens des modes de réalisation précédentes (ceci explique sa double référence).

A l'intérieur de chaque pied 150, est prévue une colonnette 180 sensiblement parallèle à la direction d'empilement dont l'extrémité inférieure est fixée sur la paroi d'assise 155 et dont l'extrémité supérieure 181 constitue les moyens de soutien 170 au sens des modes de réalisation précédentes (ceci explique sa double référence).

Comme on peut le constater sur la Fig. 7b, la face inférieure de la paroi d'assise 155 de l'unité empilable 100 repose sur l'extrémité supérieure 181 de la colonnette 180. L'un et l'autre constituent donc bien respectivement des moyens d'appui et des moyens de soutien.

L'avantages qui résulte de ce mode de réalisation est le suivant. Les doubles coudes qui caractérisent les pieds 150 et les moyens de préhension 140 des modes de réalisation précédents peuvent s'avérer difficiles à réaliser si l'on recherche une précision du positionnement d'une unité empilable par rapport à celle qui se trouve sous elle, précision qui, par exemple, peut être de l'ordre du dizième de millimètres. Or, dans ce mode de réalisation, il n'y a pas ces double-coudes. De plus, la précision de positionnement est assurée par le fait qu'il est relativement aisé de réaliser la colonnette 180 avec une grande précision, de l'ordre du 1/10 mm, notamment sa hauteur. Or, c'est cette hauteur qui détermine le positionnement entre deux unités empilables : la distance qui sépare deux unités empilables qui sont empilées l'une sur l'autre est égale à la hauteur de la colonnette 180 additionnée à l'épaisseur de la tôle qui constitue la paroi d'assise 155.

Selon un mode de réalisation avantageux d'une colonnette 180, celle-ci présente une section en forme de croix ce qui a pour effet d'augmenter son inertie et sa tenue à la flexion. Par ailleurs, son extrémité reposant sur la paroi d'assise 155 est effilée de manière à rendre son extrémité inférieure accessible pour le nettoyage.

Dans une variante de réalisation de la colonnette 180, représentée dans l'encart de la Fig. 7aa, celle-ci présente une section en forme de U pour les mêmes raisons que celles évoquées ci-dessus. De même, les extrémités inférieures des ailes du U sont effilées.

Comme on peut le constater sur les encarts accompagnant la Fig. 7a, les pieds 150 comportent des tétons de centrage 240 entrant dans des orifices de positionnement 242 dont les dimensions sont telles qu'il existe un jeu relativement important dans la direction parallèle à la direction d'empilement. Quant à la colonnette 180, elle comporte un téton de centrage 182 entrant dans un orifice de positionnement 183 sans jeu. C'est donc la colonnette 180 qui assure le positionnement précis de la paroi d'assise 155 relativement au cadre de l'unité empilable considérée.

Afin que chaque pied 150 qui est disposé sur le cadre 120 n'obstrue aucune des extrémités des moyens de pressage 132, ce qui rendrait difficile leur nettoyage, par exemple, avec un appareil de lavage de type à haute pression, la distance séparant le premier montant 151 du second montant 152 d'un pied 150 est supérieure à la largeur d'un moyen de pressage 132 (voir Figs. 3 et 6).

Pour les mêmes raisons, les bras 144a et 144b des moyens de préhension 140 ainsi que les montants 151 et 152 des pieds 150 sont montés sur champ sur le cadre 120 et y sont par exemple soudés.

L'unité empilable 100 comporte également des orifices 126 (voir notamment Fig. 3) réalisés au travers des côtés du cadre 120, et en l'occurrence des plaques transversales 122, de manière à permettre le passage d'une sonde dans les alvéoles 130 pour mesurer, en particulier, la température de cuisson à l'intérieur du jambon J.

On note également la présence de bossages 128 qui sont formés sur des côtés du cadre 120 vers l'extérieur de l'unité empilable 100. Ces bossages 128 permettent de loger les extrémités obturées de certaines poches de cuisson P1.

Par ailleurs, et pour satisfaire les désirs des consommateurs, il est apparu intéressant de proposer des jambons de tailles différentes qu'il convient de cuire dans des unités empilables de différents types dont les alvéoles 130 ont une forme et des dimensions différentes d'un type d'unité empilable à un autre.

Ainsi, les unités empilables 100 représentées à la Fig. 1a, sont d'un premier type dont chaque alvéole 130 a un fond de section arrondie et dont chaque moyen de pressage 132 a une face d'appui également de section arrondie. Chaque alvéole 130 de cette unité empilable 100 possède un rebord 134 de grande hauteur, ce qui impose de guider plus longuement le moyen de pressage 132. Par contre, les unités empilables 100 représentées à la Fig. 1b sont d'un second type dont chaque alvéole 130 a une section prismatique et dont chaque moyen de pressage 132 a une face d'appui plane.

L'unité empilable de l'invention est constituée essentiellement d'éléments standard communs aux différents types d'unité empilable.

Son coût de fabrication est inférieur à celui d'une unité empilable connue.

Elle permet d'obtenir une grande précision de pressage des jambons lors de leur cuisson.

## Revendications

1. Unité empilable (100) comprenant au moins une alvéole (130) destinée à contenir un produit alimentaire tel que du jambon pendant sa cuisson, ladite ou chaque alvéole (130) étant pourvue d'un moyen de pressage (132) prévu pour permettre le pressage d'un produit alimentaire contenu dans une alvéole (130) correspondante d'une autre unité empilable (100') identique d'un rang inférieur, l'unité empilable (100) étant pourvue de moyens de support (160, 170) destinés à permettre l'assise de l'unité empilable (100) sur une autre unité empilable (100') identique ainsi que de moyens de centrage (154a, 154b; 171 a, 171 b, 146; 159) destinés à permettre le positionnement latéral de l'unité empilable (100) lors de son empilement sur une autre unité empilable (100') identique de telle manière que l'unité empilable (100, 100v) puisse être disposée dans le prolongement vertical de ladite autre unité empilable (100'), **caractérisée en ce qu'**elle comporte des moyens de guidage (157a, 157b; 172a, 172b; 148, 162) prévus pour permettre, lors de l'empilement de ladite unité empilable (100) sur une autre unité empilable (100') identique, le guidage de l'unité empilable (100) selon au moins un plan contenant la direction verticale d'empilement (T).

2. Unité empilable (100) selon la revendication 1, **caractérisée en ce que** lesdits moyens de guidage (157a, 157b; 172a, 172b; 148, 162) sont prévus pour guider ladite unité (100) selon deux plans perpendiculaires entre eux et contenant ladite direction d'empilement (T).

3. Unité empilable (100) selon la revendication 1 ou 2, **caractérisée en ce que** les moyens de centrage (154a, 154b; 171a, 171b, 146; 159) sont prévus pour agir dans deux directions perpendiculaires entre elles et perpendiculaires à ladite direction d'empilement (T).

4. Unité empilable (100) selon l'une des revendications précédentes, du type qui comporte en outre des pieds (150), **caractérisée en ce que** lesdits moyens de guidage sont constitués d'au moins une paroi (156a, 156b ; 157a, 157b) de chaque pied (150), ladite ou chaque paroi (156a, 156b ; 157a, 157b) s'étendant dans une direction parallèle à la direction d'empilement (T) et pouvant coopérer avec au moins un élément de guidage (172a, 172b ; 174a, 174b) de ladite unité (100).

5. Unité empilable (100) selon la revendication 4, **caractérisée en ce que** chaque élément de guidage (172a, 172b ; 174a, 174b) est formé sur des moyens de préhension (140) que comporte ladite unité empilable (100).

6. Unité empilable (100) selon la revendication 4, **caractérisée en ce que** chaque élément de guidage (172a, 172b) est formé par un pion (180) que comporte ladite unité empilable (100).

7. Unité empilable (100) selon l'une des revendications précédentes, **caractérisée en ce que** les moyens de guidage sont constitués par les faces arrière (162) de chaque pied (150), lesdites faces (162) étant prévues pour coopérer respectivement avec des plaques (122a, 122b) d'une autre unité empilable (100') de rang inférieur.

8. Unité empilable selon l'une des revendications précédentes, **caractérisée en ce que** les moyens de guidage sont constitués par les faces arrière (148) de bras (144a, 144b) de moyens de préhension (140) que comporte ladite unité empilable, lesdites faces (148) étant destinées à coopérer respectivement avec des plaques (122a, 122b) d'une autre unité empilable (100) de rang supérieur.

9. Unité empilable (100) selon l'une des revendications précédentes, **caractérisée en ce que** les moyens de centrage sont constitués d'au moins deux parois (154a, 154b ; 171a, 171b) formant un angle (C ; C') aigu avec la direction verticale d'empilement (T), lesdites parois (154a et 154b; 171a et 171b) étant prévues pour pouvoir respectivement coopérer avec des éléments de centrage (175a et 175b ; 158a et 158b).

10. Unité empilable (100) selon la revendication 9, **caractérisée en ce que** lesdits éléments de centrage (175a et 175b) sont constitués par des coudes que comportent des moyens de préhension (140) de ladite unité (100).

11. Unité empilable (100) selon la revendication 9, **caractérisée en ce que** lesdits éléments de centrage (158a et 158b) sont constitués par des coudes que comportent des pieds (150) de ladite unité (100).

12. Unité empilable (100) selon la revendication 10 ou 11, **caractérisée en ce que** lesdits éléments de centrage (175a et 175b) sont constitués par des pions (180) que comporte ladite unité (100).

13. Unité empilable (100) selon la revendication 10 ou 11, **caractérisée en ce que** lesdites parois (154a et 154b) sont formées dans des pieds (150) de ladite unité (100).

14. Unité empilable (100) selon l'une des revendications 9 à 14, **caractérisée en ce que** les moyens de centrage sont constitués d'au moins deux parois (171a, 171b) des moyens de préhension (140) que comporte ladite unité (100).

15. Unité empilable (100) selon l'une des revendications précédentes, **caractérisée en ce que** les moyens de centrage sont constitués par des parois chanfreinées (159) réalisées respectivement sur les faces tournées vers le cadre (120) de pieds (150) et qui sont destinées à coopérer respectivement avec les arêtes supérieures des côtés du cadre (120') de l'autre unité empilable (100').

16. Unité empilable (100) selon l'une des revendications précédentes, **caractérisée en ce que** les moyens de centrage sont constitués par des parois chanfreinées (146) réalisées respectivement sur les faces tournées vers le cadre (120) de moyens de préhension (140) que comporte ladite unité (100) et destinées à coopérer respectivement avec les arêtes inférieures des côtés du cadre d'une autre unité empilable (100) de rang supérieur.

17. Unité empilable selon l'une des revendications précédentes, **caractérisée en ce que** les moyens de support (160, 170) sont constitués d'une paroi d'assise (155) et d'une colonnette (180) sensiblement parallèle à la direction d'empilement reposant sur ladite paroi d'assise (155) et de hauteur égale à la distance entre deux unités empilables lorsque celles-ci sont empilées moins l'épaisseur de la paroi d'assise (155), la paroi d'assise (155) d'une unité empilable étant prévue pour pouvoir reposer sur l'extrémité libre de la colonnette d'une autre unité empilable sur laquelle elle repose alors.

18. Unité empilable selon la revendication 17, **caractérisée en ce que** ladite colonnette (180) présente une section en forme de croix.

19. Unité empilable selon la revendication 17, **caractérisée en ce que** ladite colonnette (180) présente une section en forme de U.

20. Unité empilable selon une des revendications 16, 17 ou 18, **caractérisée en ce que** la paroi d'assise (155) est une paroi d'un pied (150) présentant une forme de U.

21. Unité empilable selon une des revendications 17 à 20, **caractérisée en ce que** ladite colonnette (180) comporte un téton de centrage (182) entrant sans jeu dans un orifice de positionnement (183) que comporte le cadre (122) formant ladite unité empilable.

22. Unité empilable selon la revendication 21 quand l'unité empilable de cette dernière est selon la revendication 19, **caractérisée en ce que** ledit pied (150) comporte un téton de centrage (240) centré avec un jeu parallèle à la direction d'empilement dans un orifice de positionnement (242) que comporte le cadre (122) formant ladite unité empilable.

23. Unité empilable (100) selon l'une des revendications précédentes, **caractérisée en ce que** la distance (d) séparant un plan passant par les moyens d'appui (160) et un plan passant par les moyens de soutien (170) est égale à la hauteur (h₁₃₂) d'un couvercle (132) additionnée à la hauteur (hⱼ) du produit alimentaire pressé par ledit couvercle (132) qui se trouve dans l'alvéole (130) correspondante additionnée de l'épaisseur de la tôle constituant le fond de ladite alvéole 130.

24. Unité empilable (100, 100v) selon l'une des revendications précédentes, **caractérisée en ce que** chaque bras (144a, 144b) des moyens de préhension (140) et chaque pied (150) sont constitués respectivement de bandes de métal formées par pliage et qui sont elles-mêmes fixées par soudage côtés opposés du cadre (120).

25. Unité empilable (100) selon la revendication 24, **caractérisée en ce que** les montants (151, 152) sont réunis par une barre de renfort (153) soudée par ses extrémités auxdits montants (151,152).

26. Unité empilable (100) selon la revendication 24 ou 25, **caractérisée en ce que** lesdites bandes de métal constituant lesdits bras (144a, 144b) et chaque pied (150) sont fixées sur champ sur le cadre (120).

27. Unité empilable (100) selon l'une des revendications précédentes, **caractérisée en ce qu'**elle comporte des orifices (126) réalisés au travers des côtés du cadre (120) de ladite unité (100) de manière à permettre le passage d'une sonde dans les alvéoles (130).

28. Unité empilable (100) selon l'une des revendications précédentes, **caractérisée en ce qu'**elle comporte des bossages (128) formés sur des côtés du cadre (120) de ladite unité (100) vers l'extérieur de l'unité empilable (100), les bossages (128) permettant de loger les extrémités obturées de certaines poches de cuisson (P1).

29. Unité empilable (100) selon l'une des revendications précédentes, **caractérisée en ce que** les montants (151, 152) de chaque pied (150) ne sont pas parallèles entre eux.

30. Unité empilable (100) selon l'une des revendications précédentes, **caractérisée en ce que** la distance séparant le premier montant (151) du second montant (152) d'un pied (150) est supérieure à la largeur d'un moyen de pressage (132).

## Claims

1. Stackable unit (100) comprising at least one compartment (130) which is intended to contain a food product such as ham while it is being cooked, the said or each compartment (130) being provided with a pressing means (132) which is intended to enable pressure to be applied to a food product contained in a corresponding compartment (130) in another, identical stackable unit on a lower tier, the stackable unit (100) being provided with support means (160, 170) which are intended to enable the stackable unit (100) to seat on another, identical stackable unit (100'), and with centring means (154a, 154b; 171 a, 171 b, 146; 159) which are intended to enable the stackable unit to be positioned laterally when it is stacked on another, identical stackable unit in such a way that the stackable unit (100, 100v) can be arranged as a vertical projection of the other stackable unit (100'), **characterised in that** it comprises guiding means (157a, 157b; 172a, 172b; 148, 162) which are intended to enable the said stackable unit (100), when it is stacked on another, identical stackable unit (100'), to be guided in at least one plane which contains the vertical direction of stacking (T).

2. Stackable unit (100) according to claim 1, **characterised in that** the said guiding means (157a, 157b; 172a, 172b; 148, 162) are intended to guide the said unit (100) in two mutually perpendicular plans which contain the said direction of stacking (T).

3. Stackable unit (100) according to claim 1 or 2, **characterised in that** the centring means (154a, 154b; 171 a, 171b, 146; 159) are intended to act in two directions which are mutually perpendicular and perpendicular to the said direction of stacking (T).

4. Stackable unit (100) according to one of the foregoing claims, of the type which also comprises feet (150), **characterised in that** the said guiding means are formed by at least one wall (156a, 156b; 157a, 157b) of each of the feet (150), the said or each wall (156a, 156b; 157a, 157b) extending in a direction parallel to the direction of stacking (T) and being able to co-operate with at least one guiding member (172a, 172b; 174a, 174b) belonging to the said unit (100).

5. Stackable unit (100) according to claim 4, **characterised in that** each guiding member (172a, 172b; 174a, 174b) is formed on means for taking hold (140) which the said stackable unit (100) comprises.

6. Stackable unit (100) according to claim 4, **characterised in that** each guiding member (172a, 172b) is formed by a spigot (180) which the said stackable unit (100) comprises.

7. Stackable unit (100) according to one of the foregoing claims, **characterised in that** the guiding means are formed by the rear faces (162) of each of the feet (150), the said faces (162) being intended to co-operate with respective plates (122a, 122b) belonging to another stackable unit (100') on a lower tier.

8. Stackable unit (100) according to one of the foregoing claims, **characterised in that** the guiding means are formed by the rear faces (148) of arms (144a, 144b) of means for taking hold (140) which the said stackable unit comprises, the said faces (148) being intended to co-operate with respective plates (122a, 122b) belonging to another stackable unit (100) on a higher tier.

9. Stackable unit (100) according to one of the foregoing claims, **characterised in that** the centring means are formed by at least two walls (154a, 154b; 171a, 171b) which make an acute angle (C; C') with the vertical direction of stacking (T), the said walls (154a and 154b; 171 a and 171 b) being intended to be able to co-operate with respective ones of the centring members (175a and 175b; 158a and 158b).

10. Stackable unit (100) according to claim 9, **characterised in that** the said centring members (175a and 175b) are formed by bends which the means for taking hold (140) of the said unit (100) comprise.

11. Stackable unit (100) according to claim 9, **characterised in that** the said centring members (158a and 158b) are formed by bends which feet (150) of the said unit (100) comprise.

12. Stackable unit (100) according to claim 10 or 11, **characterised in that** the said centring members (175a and 175b) are formed by spigots which the said unit (100) comprises.

13. Stackable unit (100) according to claim 10 or 11, **characterised in that** the said walls (154a and 154b) are formed in feet (150) of the said unit (100).

14. Stackable unit (100) according to one of claims 9 to 14, **characterised in that** the centring means are formed by at least two walls (171a, 171b) of the means for taking hold (140) which the said unit (100) comprises.

15. Stackable unit (100) according to one of the foregoing claims, **characterised in that** the centring means are formed by bevelled walls (159) which are produced on respective one of those faces which face towards the frame (120) of feet (150), which bevelled walls (159) are intended to co-operate with respective ones of the top edges of the sides of the frame (120') of the other stackable unit (100').

16. Stackable unit (100) according to one of the foregoing claims, **characterised in that** the centring means are formed by bevelled walls (146) which are produced on respective ones of those faces which face towards the frame (120) of means for taking hold (140) which the said unit (100) comprises, which bevelled walls (146) are intended to co-operate with respective ones of the bottom edges of the sides of the frame of another stackable unit (100) in an upper tier.

17. Stackable unit (100) according to one of the foregoing claims, **characterised in that** the support means (160, 170) are formed by a resting-down wall (155) and by a small pillar (180) which is substantially parallel to the direction of stacking and which rests on the said resting-down wall (155) and whose height is equal to the distance between two stackable units when the latter are stacked, less the thickness of the resting-down wall (155), the resting-down wall (155) of a stackable unit being intended to be able to rest on the free end of the small pillar of another stackable unit on which it then rests.

18. Stackable unit (100) according to claim 17, **characterised in that** the cross-section of the said small pillar (180) is cruciform.

19. Stackable unit (100) according to claim 17, **characterised in that** the cross-section of the said small pillar (180) is U-shaped.

20. Stackable unit (100) according to one of claims 16, 17 and 18, **characterised in that** the resting-down wall (155) is a wall of a foot (150), which foot is U-shaped.

21. Stackable unit (100) according to one of claims 17 to 20, **characterised in that** the said small pillar (180) comprises a centring stud (182) which enters with no play a positioning opening (183) which the frame (122) forming the said stackable unit comprises.

22. Stackable unit (100) according to claim 21 when the stackable unit of the latter is in accordance with claim 19, **characterised in that** the said foot (150) comprises a centring stud (240) which is located, with play parallel to the direction of stacking, in a positioning opening (242) which the frame (122) forming the said stackable unit comprises.

23. Stackable unit (100) according to one of the foregoing claims, **characterised in that** the distance (d) between a plane which passes through the carried means (160) and a plane which passes through the carrying means (170) is equal to the height (h₁₃₂) of a lid (132) plus the height (hⱼ) of the food product to which pressure is applied by the said lid (132) which is situated in the corresponding compartment (130), plus the thickness of the sheet metal forming the bottom of the said compartment (130).

24. Stackable unit (100, 100v) according to one of the foregoing claims, **characterised in that** each arm (144a, 144b) of the means for taking hold (140) and each foot (150) are formed by respective strips of metal shaped by folding which are themselves fixed by welding to opposite sides of the frame (120).

25. Stackable unit (100) according to claim 24, **characterised in that** the uprights (151, 152) are connecting together by a strengthening bar (153) which is welded to the said uprights (151, 152) by its ends.

26. Stackable unit (100) according to claim 24 or 25, **characterised in that** the said strips of metal which form the said arms (144a, 144b) and each foot (150) are fixed to the frame (120) on site.

27. Stackable unit (100) according to one of the foregoing claims, **characterised in that** it comprises openings (126) which are made through sides of the frame (120) of the said unit (100) in such a way as to enable a probe to pass through into the compartments (130).

28. Stackable unit (100) according to one of the foregoing claims, **characterised in that** it comprises humps (128) which are formed in the sides of the frame (120) of the said unit (100) towards the outside of the stackable unit (100), the humps (128) enabling the closed-off ends of certain cooking pouches (P1) to be accommodated.

29. Stackable unit (100) according to one of the foregoing claims, **characterised in that** the uprights (151, 152) of each foot (150) are not parallel to one another.

30. Stackable unit (100) according to one of the foregoing claims, **characterised in that** the distance between the first upright (151) and the second upright (152) of a foot (150) is greater than the width of a pressing means (132).

## Patentansprüche

1. Stapelbare Einheit (100) mit wenigstens einer Kammer (130), die zur Aufnahme eines Lebensmittelproduktes, wie beispielsweise Schinken während des Kochens, vorgesehen ist, wobei jede Kammer (130) mit einer Presseinrichtung (132) versehen ist, die dazu vorgesehen ist, ein Pressen eines Lebensmittelproduktes, das in einer entsprechenden Kammer (130) einer weiteren, identischen, darunter befindlichen stapelbaren Einheit (100') angeordnet ist, zu ermöglichen, wobei die stapelbare Einheit (100) Lagermittel (160, 170), die dazu vorgesehen sind, ein Aufstapeln der stapelbaren Einheit (100) auf einer weiteren, identischen, stapelbaren Einheit (100') zu ermöglichen, sowie Zentrierungsmittel (154a, 154b, 171 a, 171b, 146, 159) umfasst, die dazu vorgesehen sind, die laterale Positionierung der stapelbaren Einheit (100) bei ihrem Stapeln auf einer weiteren, identischen, stapelbaren Einheit (100') derart zu ermöglichen, dass die stapelbare Einheit (100, 100v) in der vertikalen Verlängerung der weiteren stapelbaren Einheit (100') angeordnet werden kann,
**dadurch gekennzeichnet, dass**
die stapelbare Einheit Führungsmittel (157a, 157b, 172a, 172b, 148, 162) umfasst, die dazu vorgesehen sind, die Führung der stapelbaren Einheit (100) in wenigstens einer die vertikale Stapelrichtung (T) enthaltenden Ebene zu ermöglichen, wenn die stapelbare Einheit (100) auf eine weitere, identische, stapelbare Einheit (100') gestapelt wird.

2. Stapelbare Einheit (100) nach Anspruch 1,
**dadurch gekennzeichnet, dass**
die Führungsmittel (157a, 157b, 172a, 172b, 148, 162) dazu vorgesehen sind, die Einheit (100) in zwei zueinander senkrecht stehenden und die Stapelrichtung (T) enthaltenden Ebenen zu führen.

3. Stapelbare Einheit (100) nach Anspruch 1 oder 2,
**dadurch gekennzeichnet, dass**
die Zentrierungsmittel (154a, 154b, 171a, 171b, 146, 159) dazu vorgesehen sind, in zwei zueinander und zur Stapelrichtung (T) senkrecht stehenden Richtungen zu wirken.

4. Stapelbare Einheit (100) nach einem der vorangehenden Ansprüche,
wobei die stapelbare Einheit (100) weiterhin Füße (150) umfasst,
**dadurch gekennzeichnet, dass**
die Führungsmittel von wenigstens einer Wand (156a, 156b, 157a, 157b) jedes Fußes (150) gebildet werden und wobei sich jede Wand (156a, 156b, 157a, 157b) in einer zur Stapelrichtung (T) parallelen Richtung erstreckt und mit wenigstens einem Führungselement (172a, 172b, 174a, 174b) der Einheit (100) zusammenwirken kann.

5. Stapelbare Einheit (100) nach Anspruch 4,
**dadurch gekennzeichnet, dass**
jedes Führungselement (172a, 172b, 174a, 174b) durch Greifmittel (140) gebildet wird, die die stapelbare Einheit (100) umfasst.

6. Stapelbare Einheit (100) nach Anspruch 4,
**dadurch gekennzeichnet, dass**
jedes Führungselement (172a, 172b) von einem Bolzen (180) gebildet wird, den die stapelbare Einheit (100) umfasst.

7. Stapelbare Einheit (100) nach einem der vorangehenden Ansprüche,
**dadurch gekennzeichnet, dass**
die Führungsmittel von den Rückwänden (162) jeden Fußes (150) gebildet werden, wobei die Wände (162) dazu vorgesehen sind, jeweils mit Platten (122a, 122b) einer weiteren, darunter befindlichen, stapelbaren Einheit (100') zusammenzuwirken.

8. Stapelbare Einheit nach einem der vorangehenden Ansprüche,
**dadurch gekennzeichnet, dass**
die Führungsmittel von den Rückwänden (148) der Arme (144a, 144b) der Greifmittel (140), die die stapelbare Einheit umfasst, gebildet werden, wobei die Wände (148) dazu vorgesehen sind, jeweils mit Platten (122a, 122b) einer weiteren, darüber befindlichen, stapelbaren Einheit (100) zusammenzuwirken.

9. Stapelbare Einheit (100) nach einem der vorangehenden Ansprüche,
**dadurch gekennzeichnet, dass**
die Zentrierungsmittel von wenigstens zwei Wänden (154a, 154b, 171a, 171 b) gebildet werden, die mit der vertikalen Stapelrichtung (T) einen spitzen Winkel (C, C') bilden, wobei die Wände (154a und 154b, 171a und 171b) dazu vorgesehen sind, jeweils mit Zentrierungselementen (175a und 175b, 158a und 158b) zusammenwirken zu können.

10. Stapelbare Einheit (100) nach Anspruch 9,
**dadurch gekennzeichnet, dass**
die Zentrierungselemente (175a und 175b) von Kniestücken gebildet werden, die die Greifmittel (140) der Einheit (100) umfassen.

11. Stapelbare Einheit (100) nach Anspruch 9,
**dadurch gekennzeichnet, dass**
die Zentrierungselemente (175a und 175b) von Kniestücken gebildet werden, die die Füße (150) der Einheit (100) umfassen.

12. Stapelbare Einheit (100) nach einem der Ansprüche 10 oder 11,
**dadurch gekennzeichnet, dass**
die Zentrierungselemente (175a und 175b) von Bolzen (180) gebildet werden, die die stapelbare Einheit (100) umfassen.

13. Stapelbare Einheit (100) nach einem der Ansprüche 10 oder 11,
**dadurch gekennzeichnet, dass**
die Wände (154a und 154b) in den Füßen (150) der Einheit (100) ausgebildet sind.

14. Stapelbare Einheit (100) nach einem der Ansprüche 9 bis 14,
**dadurch gekennzeichnet, dass**
die Zentrierungsmittel von wenigstens zwei Wänden (171a, 171b) der Greifmittel (140) gebildet werden, die die Einheit (100) umfassen.

15. Stapelbare Einheit (100) nach einem der vorangehenden Ansprüche,
**dadurch gekennzeichnet, dass**
die Zentrierungsmittel durch abgeschrägte Wände (159) gebildet werden, die jeweils auf den dem Rahmen (120) zugerichteten Flächen der Füße (150) ausgebildet sind und die dazu vorgesehen sind, jeweils mit den Seitenoberkanten des Rahmens (120') der weiteren stapelbaren Einheit (100') zusammenzuwirken.

16. Stapelbare Einheit (100) nach einem der vorangehenden Ansprüche,
**dadurch gekennzeichnet, dass**
die Zentrierungsmittel durch abgeschrägte Wände (146) gebildet werden, die jeweils auf den dem Rahmen (120) zugerichteten Flächen der Greifmittel (140), die die Einheit (100) umfasst, ausgebildet sind und die dazu vorgesehen sind, jeweils mit den Seitenunterkanten des Rahmens einer weiteren, darüber befindlichen, stapelbaren Einheit (100) zusammenzuwirken.

17. Stapelbare Einheit (100) nach einem der vorangehenden Ansprüche,
**dadurch gekennzeichnet, dass**
die Lagermittel (160, 170) durch eine Stellfläche (155) und eine sich im Wesentlichen parallel zur Stapelrichtung erstreckende Säule (180), die auf der Stellfläche (155) aufliegt und deren Höhe dem Abstand zwischen zwei aufeinander gestapelten stapelbaren Einheiten abzüglich der Dicke der Stellfläche (155) entspricht, gebildet werden, wobei die Stellfläche (155) einer stapelbaren Einheit dazu vorgesehen ist, auf dem freien Ende der Säule einer weiteren stapelbaren Einheit aufliegen zu können, auf welcher sie dann aufliegt.

18. Stapelbare Einheit (100) nach Anspruch 17,
**dadurch gekennzeichnet, dass**
die Säule (180) einen Querschnitt in Form eines Kreuzes aufweist.

19. Stapelbare Einheit (100) nach Anspruch 17,
**dadurch gekennzeichnet, dass**
die Säule (180) einen Querschnitt in U-Form aufweist.

20. Stapelbare Einheit (100) nach einem der Ansprüche 16, 17 oder 18,
**dadurch gekennzeichnet, dass**
es sich bei der Stellfläche (155) um eine Wand eines Fußes (150) handelt, die eine U-Form aufweist.

21. Stapelbare Einheit (100) nach einem der Ansprüche 17 bis 20,
**dadurch gekennzeichnet, dass**
die Säule (180) einen Zentrierungsbolzen (182) aufweist, der ohne Spiel in eine Positionierungsöffnung (183), die der die stapelbare Einheit bildende Rahmen (122) umfasst, eindringt.

22. Stapelbare Einheit (100) nach Anspruch 21 in Kombination mit Anspruch 19,
**dadurch gekennzeichnet, dass**
der Fuß (150) einen Zentrierungsbolzen (240) aufweist, der mit Spiel parallel zur Stapelrichtung in einer Positionierungsöffnung (242), die der die stapelbare Einheit (100) bildende Rahmen (122) umfasst, zentriert ist.

23. Stapelbare Einheit (100) nach einem der vorangehenden Ansprüche,
**dadurch gekennzeichnet, dass**
der Abstand (d) zwischen einer durch die Auflagemittel (160) verlaufenden Ebene und einer durch die Stützmittel (170) verlaufenden Ebene der Höhe (h₁₃₂) eines Deckels (132) zuzüglich der Höhe (hⱼ) des von dem Deckel (132) gepressten Lebensmittelproduktes, das sich in der entsprechenden Kammer (130) befindet, zuzüglich der Dicke des Bleches, das den Boden der Kammer (130) bildet, entspricht.

24. Stapelbare Einheit (100, 100v) nach einem der vorangehenden Ansprüche,
**dadurch gekennzeichnet, dass**
jeder Arm (144a, 144b) der Greifmittel (140) und jeder Fuß (150) jeweils aus durch Biegen gebildeten Metallbändern besteht, die ihrerseits mittels Schweißens an gegenüberliegenden Seiten des Rahmens (120) befestigt sind.

25. Stapelbare Einheit (100) nach Anspruch 24,
**dadurch gekennzeichnet, dass**
die Streben (151, 152) durch einen Verstärkungsträger (153) miteinander verbunden sind, der mit seinen Enden an den Streben (151, 152) angeschweißt ist.

26. Stapelbare Einheit (100) nach Anspruch 24 oder 25,
**dadurch gekennzeichnet, dass**
die die Arme (144a, 144b) und jeden Fuß (150) bildenden Metallbänder an der Kante des Rahmens (120) befestigt sind.

27. Stapelbare Einheit (100) nach einem der vorangehenden Ansprüche,
**dadurch gekennzeichnet, dass**
sie Öffnungen (126) umfasst, die quer zu den Seiten des Rahmens (120) der Einheit (100) ausgebildet sind, um den Zugang einer Sonde in die Kammern (130) zu ermöglichen.

28. Stapelbare Einheit (100) nach einem der vorangehenden Ansprüche,
**dadurch gekennzeichnet, dass**
sie Buckel (128) umfasst, die auf den Seiten des Rahmens (120) der Einheit (100) bezüglich der stapelbaren Einheit (100) nach außen gerichtet ausgebildet sind, wobei die Buckel (128) die Aufnahme der verpressten Enden bestimmter Kochtaschen (P1) ermöglichen.

29. Stapelbare Einheit (100) nach einem der vorangehenden Ansprüche,
**dadurch gekennzeichnet, dass**
die Streben (151, 152) jedes Fußes (150) nicht parallel zueinander sind.

30. Stapelbare Einheit (100) nach einem der vorangehenden Ansprüche,
**dadurch gekennzeichnet, dass**
der die erste Strebe (151) von der zweiten Strebe (152) eines Fußes (150) trennende Abstand größer als die Breite einer Presseinrichtung (132) ist.
